# EUROPEAN PATENT SPECIFICATION

(11) **EP 1 942 284 B1**
(45) Date of publication and mention of the grant of the patent: **14.03.2018**
(21) Application number: 06797403.0
(22) Date of filing: 04.09.2006
(51) Int. Cl.: F16C 33/64, B60B 27/00, B60B 35/18, F16C 19/38, F16C 33/62

(54) **BEARING DEVICE FOR WHEEL**
LAGERVORRICHTUNG FÜR RAD
DISPOSITIF DE ROULEMENT POUR ROUE

(30) Priority: 09.09.2005 JP 2005261920
(43) Date of publication of application: 09.07.2008
(73) Proprietor: NTN Corporation, Osaka-shi, Osaka 550-0003 (JP)
(72) Inventor: FUJIMURA, Akira, Iwata-shi Shizuoka; 4380037 (JP); OHTSUKI, Hisashi, Iwata-shi Shizuoka; 4380037 (JP)
(74) Representative: Dr. Gassner & Partner mbB
(86) International application number: PCT/JP2006/317480
(87) International publication number: WO 2007/029658

(56) References cited:
- EP-A2- 1 347 185
- JP-A- 2000 002 251
- JP-A- 2004 150 482
- JP-A- 2005 098 475
- US-B1- 6 280 093

## Description

### BACKGROUND OF THE INVENTION

### (Field of the Invention)

The present invention generally relates to a wheel support bearing assembly in the form of a hub unit type combined with a double row tapered roller bearing type, and more particularly to a wheel support bearing assembly having a relatively large load capacity, which is used in a truck, a station wagon or the like, and also to a wheel support bearing assembly of a general passenger car.

### (Description of the Prior Art)

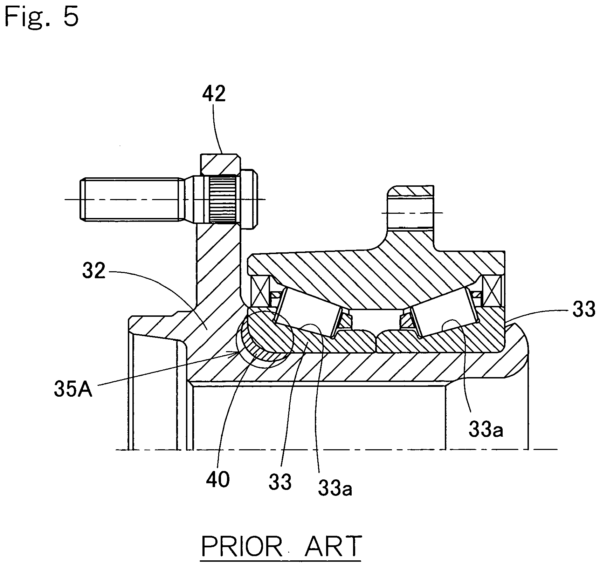

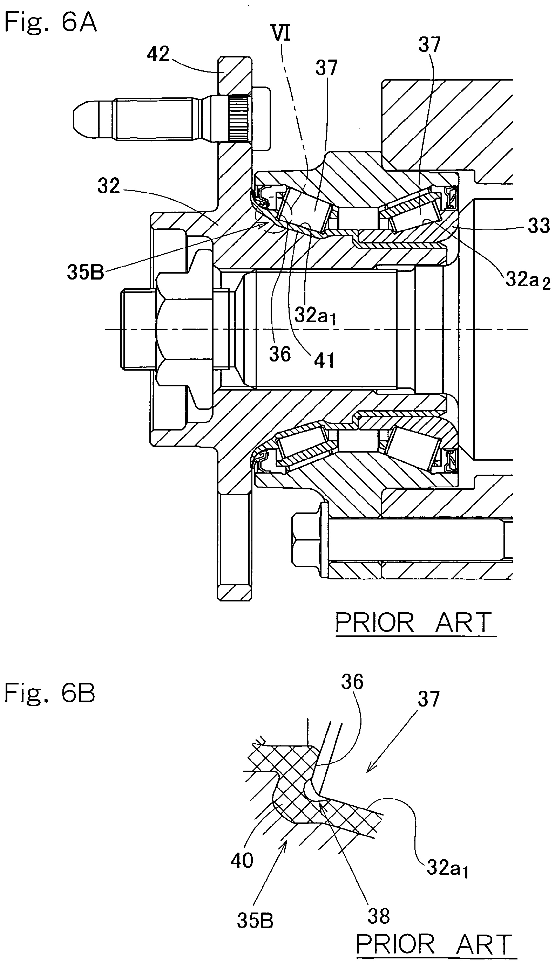

The wheel support bearing assembly mentioned above includes various kinds, however, the bearing device used for a pickup truck has been in the form of mainly a second generation type structure in which a hub axle and a tapered roller bearing are combined as shown in Fig. 5. Recently, there has been developed a third generation type structure as shown in Fig. 6 in which a preload dispersion can be suppressed, resulting in reduction of the weight (See, for example, the Japanese Laid-open Patent Publication No. 11-51064, published February 23, 1999). In the second and half generation type structure shown in Fig. 5, inner raceways 33a and 33a in respective rows in a double row bearing are formed on double row inner race members 33 and 33 which are formed separately from a hub axle 32 provided with a flange 42 so as to be fitted to the hub axle 32. On the contrary, in the third generation structure shown in Fig. 6, an inner raceway 32a1 in one row in the double row bearing is formed directly on the hub axle 32 with the flange 42, and an inner raceway 32a2 in the other row is formed as an separate member from the hub axle 32 and is formed on the inner race member 33 fitted to the hub axle 32.

Since each of the generation types of bearing devices for the wheel is subject to a moment load from a tire ground point, which causes a great stress in comer portions 35A and 35B located adjacent to the respective raceways 33a and 32a1 in a root of the flange 42 in the hub axle 32 that serves as a rotating member, a fatigue strength countermeasures are applied thereto. Specifically, in the second and half generation type structure shown in Fig. 5, a hardened layer 40 formed by an induction hardening is provided in the corner portion 35A as a strength countermeasure, and a larger cross section R (a radius of curvature) of the corner portion 35A is employed as a stress relaxation countermeasure avoiding a stress concentration.

On the contrary, in the third generation type structure shown in Fig. 6, a hardened layer 41 is formed by an induction hardening in a surface layer portion lying from a seal land portion at a root portion of the flange 42 to an inner race member mounting surface on the surface of the hub axle 32.

Further, in the third generation type structure, the inner race member raceway 32a1 in one row is directly formed in the hub axle 32 as mentioned above, and, there is provided a large collar 36 in contact with a large end face of a tapered roller 37, as shown in Fig. 6B. A recess 38 in the form of a circumferential groove for applying a grinding work or the like to each of the surfaces is provided in a corner portion 35B defined between the large collar 36 and the inner race member raceway 32a1. The recess 38 is formed by means of a lathe turning work and has a small R (about R0.8 to R2 mm), for securing a contact area between the large end surface of the tapered roller 37 and the large collar 36 of the hub axle 32.

In the third generation type structure shown in Fig. 6, since a highest stress occurs in the root portion of the flange 42 (particularly, the root portion of the large collar 36 with which the end surface of the roller 37 contacts) of the hub axle 32, the fatigue strength countermeasure is necessary for this portion. This portion is reinforced by the induction hardening as mentioned above.

However, since the large collar 36 comes to an inner position of the contact surface with the roller end surface, it is impossible to make the cross section R of the recess 38 large similarly to the case in the second and half generation, being restricted by a diameter of the roller 37. Accordingly, if the great moment load is applied, the stress concentration is caused in the recess 38, and there is a possibility that a breakage is generated starting from the recess 38.

It is to be noted that the above description is given of the case of the bearing type provided with the large collar 36 in the hub axle, however, in the case of the bearing type provided with the large collar in the outer race member, a reduction of the strength is caused by the stress concentration in the same manner as mentioned above, in the recess provided in the corner portion between the outer race member large collar and the raceway. Document US B1 6.280.093 (Ohtsuki et al) describes a wheel support structure (1) in which a heat treatment is performed after the recess (14) is formed.

### SUMMARY OF THE INVENTION

An object of the present invention is to provide a wheel support bearing assembly in which a stress concentration generated in a recess in a hub axle or an outer race member can be reduced, thereby increasing the repeated fatigue strength.

In accordance with the present invention, there is provided a wheel support bearing assembly including a hub axle having an inner race mounting surface formed on an outer periphery at one end of the hub axle and adapted to be mounted with the inner race member, the other raceway of the double-row tapered roller bearing formed at a location adjacent to the inner race mounting surface, and a hub flange provided at the other end of the hub axle; an outer race member; and a double rows of tapered rollers interposed between the raceway of the hub axle and one raceway of the outer race member, and between the raceway of the inner race and the other raceway of the outer race member, respectively; either one of said hub axle or said outer race member being provided with a large collar at a hub flange-side end of the raceway thereof in contact with a large end face of the tapered roller, and further having a recess in the form of a groove extending circumferentially along a corner portion defined cooperatively by the large collar and the raceway therebetween, said one of the hub axle and the outer race member, both of which are made of a carbon steel, having a surface that is formed with a hardened layer by means of a heat treatment, lying at least from the raceway to a potion in the vicinity of a root potion of the hub flange, wherein a surface within the recess in the hardened layer is machined or ground to thereby apply a compressive residue stress to the hardened layer.

In accordance with this structure, since a surface roughness within the recess is improved by utilizing the machining work or the grinding work to the surface within the recess, and the compressive residue stress is applied to the hardened layer, it is possible to reduce, by cancellation, a stress caused concentrically as a tensile stress in the recess. Accordingly, in cooperation with the formation of the hardened layer, it is possible to achieve an increase of the repeated fatigue strength.

In the wheel bearing assembly in accordance with the present invention, the recess may be formed by means of a grinding work or a machining work after formation of the hardened layer, to thereby apply the compressive residue stress to the hardened layer, in place of the application of the machining work or the grinding work to the surface within the recess in the hardened layer. Therefore, it is possible to apply the compressive residue stress to the surface of the hardened layer.

Also in the case of this structure, since the recess is formed by means of the grinding work or the machining work after the hardened layer is formed, the compressive residue stress is applied to the surface of the hardened layer of the hub axle. Accordingly, it is possible to reduce by the cancellation the stress caused concentrically as the tensile stress in the flange root portion of the hub axle. Accordingly, in cooperation with the formation of the hardened layer, it is possible to achieve an improvement of the strength.

In the wheel bearing assembly in accordance with the present invention, the recess in the form of the groove extending circumferentially may have an arcuated sectional shape. It is possible to further relax the stress concentrated to the root portion of the hub flange or the like by forming the recess as the semicircular cross sectional shape as mentioned above.

In the wheel bearing assembly in accordance with the present invention, the hardened layer may be formed by means of an induction hardening as the heat treatment. The induction hardening is easily carried out, and can easily regulate a depth of the hardened layer.

In the case of forming the recess by means of a working after the hardened layer is formed, it is preferable that the hardened layer is formed by means of an induction hardening as the heat treatment, and the recess has a depth smaller than that of the hardened layer. Although grinding or machining of the recess after formation of the hardened layer generates the compressive residue stress in the surface of the hardened layer as mentioned above, the recess may preferably have a depth smaller than the depth of the hardened layer in such a manner as to prevent the hardened layer from being interrupted thereby.

### BRIEF DESCRIPTION OF THE DRAWINGS

In any event, the present invention will become more clearly understood from the following description of a preferred embodiment thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a longitudinal sectional view of a wheel support bearing assembly in accordance with a first preferred embodiment of the present invention;
Fig. 1B is an enlarged cross sectional view of a portion I in Fig. 1A;
Fig. 2A is a sectional view of a wheel support bearing assembly in accordance with a second preferred embodiment of the present invention;
Fig. 2B is an enlarged sectional view of a portion II in Fig. 2A;
Fig. 3 is a fragmentary longitudinal sectional view of a wheel support bearing assembly in accordance with a modified embodiment of the first embodiment;
Fig. 4 is an enlarged sectional view of a portion of a wheel support bearing assembly in accordance with a third embodiment of the present invention;
Fig. 5 is a sectional view of a prior art;
Fig. 6A is a longitudinal sectional view of another prior art; and
Fig. 6B is a partly enlarged sectional view of a portion IV in Fig. 6A.

### DETAILED DESCRIPTION OF THE EMBODIMENTS

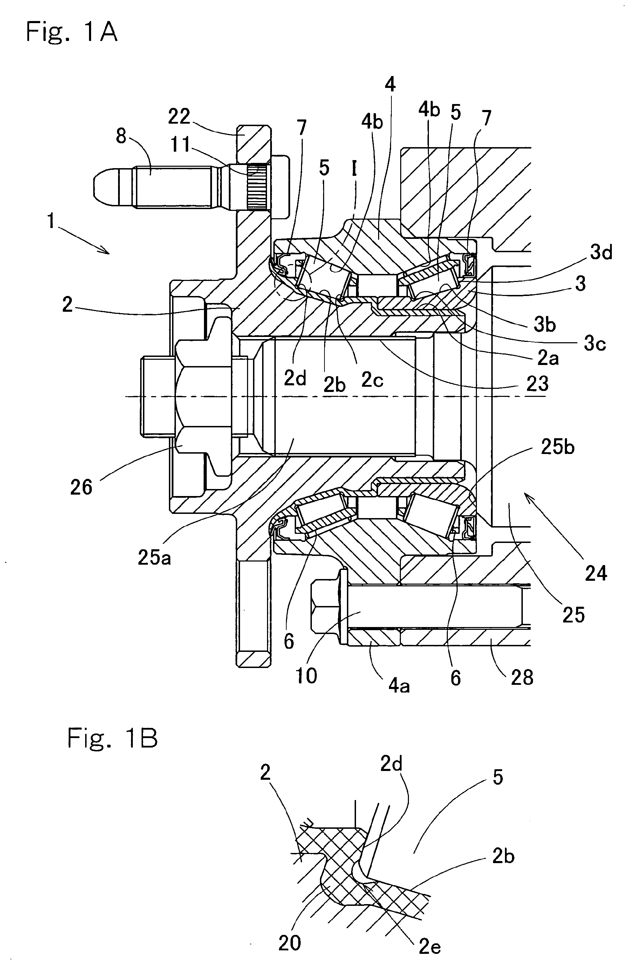

A description will be given of a first preferred embodiment in accordance with the present invention with reference to Figs. 1A and 1B. A wheel support bearing assembly of this embodiment is structured as a hub unit type and a double row tapered roller bearing type, and belongs to a so-called third generation type. The wheel support bearing assembly 1 corresponds to an example of a bearing assembly used for supporting a drive wheel and includes a hub axle 2 and an outer race member 4. The hub axle 2 has on an outer periphery at one end thereof an inner race member mounting surface 2a on which an inner race member 3 in the form of a separate member is mounted in one row. Also, the hub axle 2 has a raceway 2b in the other row formed adjacent to the inner race member mounting surface 2a, and has a hub flange 22 provided on an outer periphery at the other end thereof, to which the wheel is mounted. The one end comes to an inboard side and the other end comes to an outboard side. It is to be noted that in the specification herein set forth, the terms "outboard" and "inboard" represent one side of the vehicle body away from the longitudinal center of the vehicle body and the other side of the vehicle body close to the longitudinal center of the vehicle body, respectively.

The hub axle 2 is formed with a step having a depth corresponding to that of a small-diameter end of the inner race member 3 between the inner race member mounting surface 2a and the inner race member raceway 2b. The separate inner race member 3 is formed with an inner race member raceway 3b in one row. Tapered rollers 5 in both of the rows are arranged respectively in such a manner that small-diameter ends are opposed to each other, and are retained by respective retainers 6. The hub axle 2 and the inner race member 3 are respectively provided with large collars 2d and 3d in contact with a large end face of the tapered roller 5, and small collar surfaces 2c and 3c in contact with a small end face of the tapered roller, at respective axial ends of the raceways 2b and 3b.

The outer race member 4 includes a race member having outer raceways 4b and 4b in respective rows, and is provided with a fitting portion 4a in the form of a flange on an outer diameter surface thereof. In the outer race member 4 employed in this embodiment has no collar on a large end side or a small end side. Each of opposite ends on outboard and inboard sides of the outer race member 4 is fitted with a seal 7 for sealing an annular space delimited between the outer and inner race members. The outer race member 4 is fitted to a knuckle 28 in a suspension system of a vehicle body by means of a knuckle bolts 10 passing through respective holes in the fitting portion 4a.

The hub axle 2 has a through hole 23 in a radial center portion thereof, through which a stem portion 25a of a joint outer race member 25 forming one joint member of a constant velocity universal joint 24 is inserted. The hub axle 2 and the inner race member 3 are firmly fixed to each other in an axial direction between a nut 26 and a step surface 25b of the joint outer race member 25 by threading the nut 26 on a male threaded portion at a free end of the stem portion 25a. The hub flange 22 is formed with a bolt insertion hole 11 into which a hub bolt 8 is press-fitted, and a braking part and a tire wheel (both of which are not shown) arranged on the hub flange 22 in an overlapping fashion are fixed to the hub flange 22 by means of a hub nut (not shown) threadly engaging with the hub bolt 8.

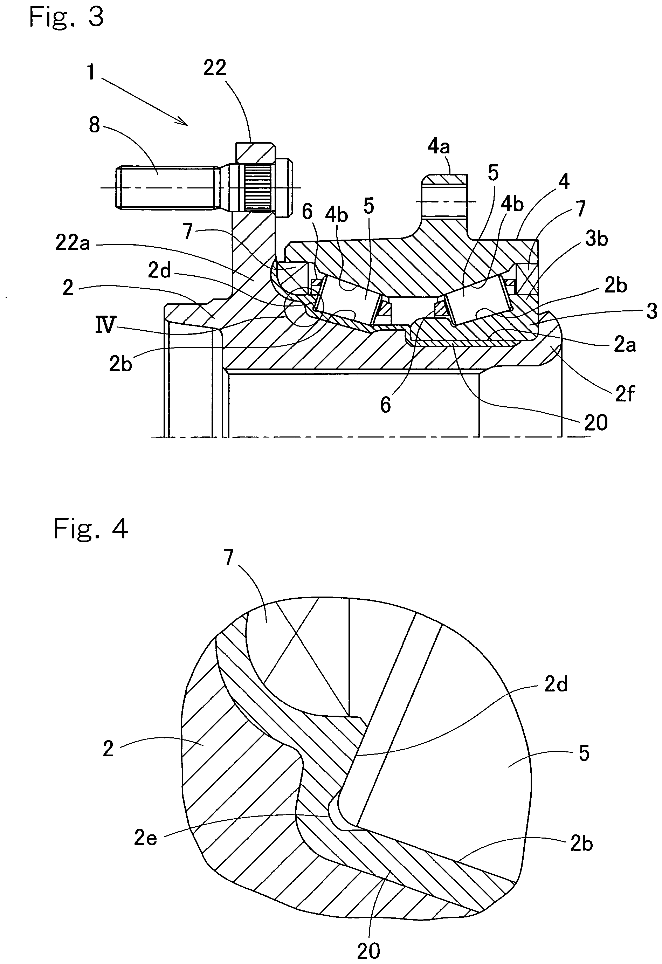

It is to be noted that, for example, as shown in Fig. 3, the hub axle 2 may be structured such as to have a flange-shaped crimped portion 2f urging an end face of the inner race member 3 formed on the end side of the inner race member mounting surface 2a of the hub axle 2, whereby the inner race member 3 is firmly fixed in the axial direction by the crimped portion 2f.

Further, the hub axle 2 may be structured such as to dispense with a small collar as shown in Fig. 3.

As shown in an enlarged manner in Fig. 1B, in the hub axle 2, the large collar 2d and the raceway 2b cooperatively define a corner potion therebetween, which is formed with a recess 2e in the form of a groove extending circumferentially and having an arcuated sectional shape.

The hub axle 2 is made of a carbon steel (corresponding to S40C to S80C in JIS standard), and is formed with a hardened layer 20 of a predetermined depth by means of a heat treatment in a portion of an outer diameter side surface thereof ranging from the inner race member mounting surface 2a to a root portion of the flange 22. The heat treatment may include, for example, an induction hardening.

After the heat treatment, a machining work in the form of a turning work or a grinding work is applied to an inner surface of the recess 2e between the large collar 2d and the raceway 2b of the hub axle 2. In other words, the recess 2e is formed by means of the turning, followed by the heat treatment mentioned above, and then finished by means of the turning work or the grinding work.

In accordance with the wheel support bearing assembly having the structure of this embodiment mentioned above, since the hardened layer 20 by the heat treatment is formed in the portion of the surface of the hub axle 2 ranging from the raceway 2b to the root portion of the hub flange 22, a strength of the hub axle 2 can be improved. Particularly, in this embodiment, since the hardened layer 20 is formed over the inner race member mounting surface 2a the strength of the hub axle 2 can be further increased.

Further, since the turning work or the grinding work is applied to the inner surface of the recess 2e between the large collar 2d and the raceway 2b of the hub axle 2 after the hardened layer 20 is formed, a surface roughness within the recess 2e is improved in the case of the lathe turning work, and a compressive residue stress is applied to the hardened layer 20 by means of the lathe turning work or the grinding work. Accordingly, the repeated fatigue strength of the hub axle 2 is increased. The recess 2e between the large collar 2d and the inner race member raceway 2b is positioned in the vicinity of the root portion of the hub flange 22, thereby undergoing a great moment load. Also, since the recess 2e has a small section R, a stress concentration is caused at the recess 2e. However, since the compressive residue stress is applied as mentioned above, it is possible to reduce by the cancellation the stress, which concentrically occurs as the tensile stress. Therefore, it is possible to achieve an increase of the strength against the repeated fatigue of the hub axle 2, in cooperation with the formation of the hardened layer 20.

In addition, in this embodiment, since the recess 2e is formed as the groove having the arcuated sectional shape, it is possible to further reduce the stress concentrated into the root portion of the hub flange 22.

Moreover, since the hardened layer 20 is formed by means of the induction hardening, the hardening can be easily carried out, and it is possible to easily adjust the depth of the hardened layer 20 and a range of area that is to be hardened.

Table 1 shows test results of a repeated fatigue limit of the above described embodiment of the present invention (the embodiment product) and a comparative example. The embodiment product is an example in which the hardened layer 20 is formed by the high-frequency heat treatment and subsequently the inner surface of the recess 2e is finished by means of the grinding work. The comparative example is obtained by finishing the recess 2e by means of the turning work and subsequently applying the high-frequency heat treatment to the hardened layer 20. Other structural features of the embodiment product and the comparative example are substantially similar to each other.

**[Table 1]**

| Forming Process | Fatigue Limit (MPa) |
|---|---|
| Induction Hardening before Grinding (Embodiment Product) | 830 |
| Turning before Induction Hardening (Comparative Example) | 560 |

As shown in Table 1, a fatigue limit for the comparative example is 560 MPa, while the fatigue limit for the embodiment product is largely increased to 830 MPa. In other words, the results show that the grinding work after the heat treatment is effective for the increase of the fatigue limit.

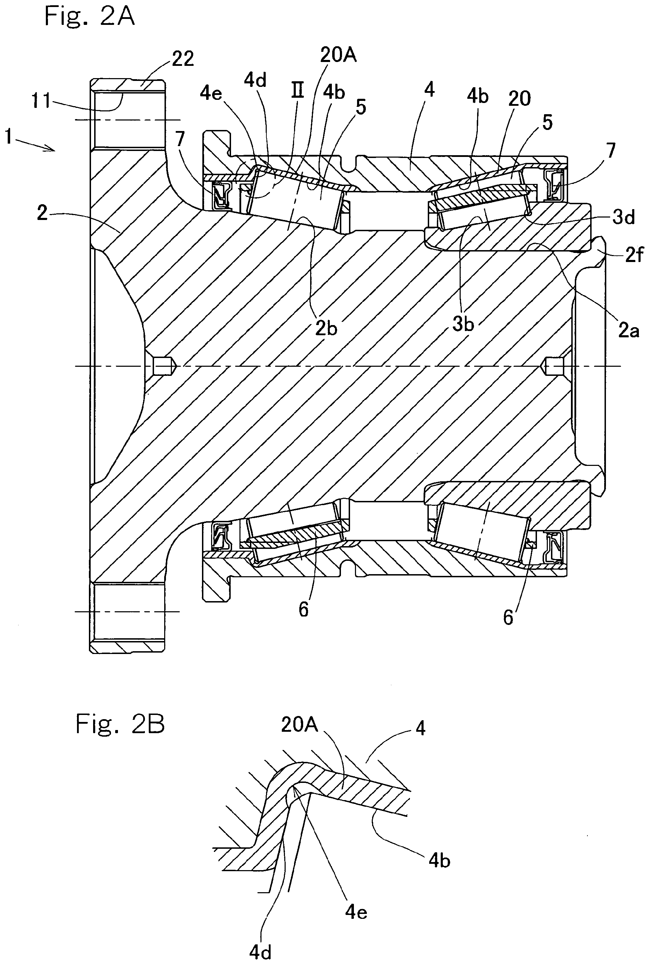

Figs. 2A and 2B show a second preferred embodiment in accordance with the present invention. The wheel support bearing assembly is applied to a bearing assembly used for a driven wheel, and is similar to that of the first embodiment but different therefrom in that the hub axle 2 does not have the through hole 23 in the first embodiment shown in Fig. 1, and, the outer race member 4 is provided with the large collar 4d in contact with the large end face of the tapered roller 5 in the inboard row while the hub axle 2 dispenses with the large collar. Further, although it is not shown therein, the hardened layer 20 is formed in the hub axle 2 by the heat treatment in the same manner as the embodiment in Fig. 1.

As shown in an enlarged manner in Fig. 2B, in the hub axle 2, the large collar 2d and the raceway 2b cooperatively define a corner potion therebetween, which is formed with a recess 2e in the form of a groove extending circumferentially and having an arcuated sectional shape.

The outer race member 4 is made of a carbon steel (corresponding to S40C to S80C in JIS standard) in the same manner as the hub axle 2, and is formed with a hardened layer 20A of a predetermined depth is formed by means of a heat treatment in respective positions of an inner diameter side surface thereof each ranging from the raceways 4b to the seal fitted portions. The hardened layer 20A may be formed over the substantially entire region of the inner diameter surface of the recess 4. The heat treatment may include an induction hardening. After the heat treatment, the grinding work is applied to an inner surface of the recess 4e between the large collar 4d and the raceway 4b of the outer race member 4. In other words, the recess 4e is formed by means of a turning, followed by the heat treatment mentioned above, and then finished by means of the grinding work.

Further, in this embodiment, the inner race member 3 is fixed to the hub axle 2 by the crimped portion 2f provided in the hub axle 2 in the same manner as the modified embodiment in Fig. 3. Other structural features in the embodiment in Fig. 2 are substantially similar to those of the first embodiment.

In accordance with the wheel support bearing assembly having the structure mentioned above, since the grinding work is applied to the inner surface of the recess 4e between the large collar 4d and the outer race member raceway 4b of the outer race member 4 after the hardened layer 20A is formed, a surface roughness within the recess 4e is improved, and a compressive residue stress is applied to the hardened layer 20A by means of the grinding work. Accordingly, the repeated fatigue strength of the outer race member 4 is increased.

Fig. 4 shows a third preferred embodiment in accordance with the present invention. Fig. 4 is an enlarged cross sectional view of a portion IV in Fig. 3. This embodiment is a partly enlarged cross sectional view in the first embodiment described together with Fig. 1. In this embodiment, the recess 2e in the form of the circumferential groove defined between the large collar portion 2d and the raceway 2b of the hub axle 2 is formed by means of the grinding work or the machining work after the hardened layer 20 is formed by the heat treatment such as the induction hardening work or the like. In other words, the recess 2e is not formed before the hardened layer 20 is formed, but the recess 2e is formed only after the hardened layer 20 is formed. The compressive residue stress is applied to the surface of the hardened layer 20 by means of the grinding work or the machining work. The depth of the recess 2e is made smaller than the depth of the hardened layer 20. Other structures in this embodiment are substantially similar to those of the embodiment in Fig. 3, may be similar to those of the embodiment in Fig. 1.

In the case that the recess 2e is formed by means of the lathe turning work or the machining work after the hardened layer 20 is formed as mentioned above, the compressive residue stress is applied to the surface of the hardened layer 20. Accordingly, the repeated fatigue strength of the hub axle 2 is increased. The recess 2e between the large collar 2d and the inner race member raceway 2b is positioned in the vicinity of the root portion of the hub flange 22, thereby undergoing a great moment load. Also, since the recess 2e has a small section R, a stress concentration is caused at the recess 2e. However, since the compressive residue stress is applied as mentioned above, it is possible to reduce by the cancellation the stress, which concentrically occurs as the tensile stress. Therefore, it is possible to achieve an increase of the strength against the repeated fatigue of the hub axle 2, in cooperation with the formation of the hardened layer 20. In the case that the recess 2e is formed by means of the grinding work, the surface roughness within the recess 2e is improved, and the repeated fatigue strength is further increased.

Since the depth of the recess 2e is made smaller than the depth of the hardened layer 20, the hardened layer 20 can be prevented from being interrupted by the recess 2e and decrease of the strength can be avoided.

It is to be noted that, in the outer race member 4 shown in Fig. 2, the recess 4e in the form of the circumferential groove between the large collar 4d and the raceway 4b may be formed by means of the grinding work or the machining work after the hardened layer 20A is formed, in such a manner as to apply the compressive residue stress to the surface of the hardened layer 20.

Although the present invention has been fully described in connection with the preferred embodiment thereof with reference to the accompanying drawings which are used only for the purpose of illustration, those skilled in the art will readily conceive numerous changes and modifications within the framework of obviousness upon the reading of the specification herein presented of the present invention.

Accordingly, such changes and modifications are, unless they depart from the scope of the present invention as delivered from the claims annexed hereto, to be construed as included therein.

## Claims

1. A wheel support bearing assembly comprising:
an inner race member (3) formed with one raceway of a double-row tapered roller bearing assembly;
a hub axle (2) having an inner race member mounting surface (2a) formed on an outer periphery at one end of the hub axle (2) and adapted to be mounted with the inner race member (3), the other raceway (2b) of the double-row tapered roller bearing formed at a location adjacent to the inner race member mounting surface (2a), and a hub flange (22) provided at the other end of the hub axle (2);
an outer race member (4); and
a double rows of tapered rollers (5) interposed between the raceway of the hub axle (2) and one raceway (4b) of the outer race member (4), and between the raceway (2b, 3b) of the inner race and the other raceway (2b) of the outer race member (4), respectively;
either one of said hub axle (2) or said outer race member (4) being provided with a large collar (2d, 3d) at a hub flange-side end of the raceway thereof in contact with a large end face of the tapered roller (5), and further having a recess (2e) in the form of a groove, formed by means of turning, extending circumferentially along a corner portion defined cooperatively by the large collar (2d) and the raceway therebetween, (2b) said one of the hub axle (2) and the outer race member (4), both of which are made of a carbon steel, having a surface that is formed following the turning with a hardened layer (20) by means of a heat treatment, lying at least from the raceway (2b) to a portion in the vicinity of a root portion of the hub flange (22), including the recess (2e),
wherein a surface within the recess (2e) in the hardened layer is machined or ground to such an extent that the hardened layer is not interrupted to thereby apply a compressive residue stress to the hardened layer.

2. A wheel support bearing assembly as claimed in claim 1, wherein the recess (2e) in the form of the groove extending circumferentially has an arcuated sectional shape.

3. A wheel support bearing assembly as claimed in claim 1, wherein the hardened layer is formed by means of an induction hardening as the heat treatment.

4. A wheel support bearing assembly as claimed in claim 1, wherein the hardened layer is formed in a portion of the hub axle (2), ranging from the inner race member mounting surface (2a), through the raceway (2b), to the root portion of the hub flange (22).

## Patentansprüche

1. Radlageranordnung, umfassend:
einen mit einer Laufbahn einer doppelreihigen Kegelrollenlagereinheit gebildeten inneren Lagerring (3);
eine Nabenachse (2) mit einer auf einem Außenumfang an einem Ende der Nabenachse (2) ausgebildeten inneren Lagerring-Montagefläche (2a), und dazu ausgelegt, mit dem inneren Lagerring (3), der anderen Laufbahn (2b) der Kegelrollenlagereinheit, die an einer Stelle im Anschluss an die innere Lagerring-Montagefläche (2a) ausgebildet ist, und einem am anderen Ende der Nabenachse (2) bereitgestellten Nabenflansch (22) montiert zu werden;
einen äußeren Lagerring (4); und
eine Doppelreihe von Kegelrollen (5), die zwischen der Nabenachse (2) und einer Laufbahn (4b) des äußeren Lagerrings (4) bzw. zwischen der Laufbahn (2b, 3b) des inneren Lagerrings und der Laufbahn (2b) des äußeren Lagerrings (4) angeordnet ist;
wobei entweder die Nabenachse (2) oder der äußere Lagerring (4) mit einem großen Kragen (2d, 3d) an einem nabenflanschseitigen Ende der Laufbahn in Kontakt mit einer großen Endfläche der Kegelrolle (5) versehen ist, und weiterhin mit einer Aussparung (2e) in Form einer mittels Drehen ausgebildeten Nut, die sich in Umfangsrichtung entlang eines Eckabschnitts erstreckt, der gemeinsam durch den Kragen (2d) und die dazwischen angeordnete Laufbahn definiert ist,
wobei entweder die Nabenachse (2) oder der äußere Lagerring (4), die beide aus einem Carbonstahl hergestellt sind, eine Fläche aufweisen, die nach dem Drehen mit einer gehärteten Schicht (20) mittels einer Wärmebehandlung ausgebildet wird, die mindestens von der Laufbahn (2b) bis zu einem Abschnitt in der Nähe eines Fußabschnitts des Nabenflansches (22), einschließlich der Aussparung (2e), reicht,
wobei eine Fläche innerhalb der Aussparung (2e) in der gehärteten Schicht derart gefräst oder geschliffen ist, dass die gehärtete Schicht nicht unterbrochen ist, um der gehärteten Schicht dadurch eine bleibende Druckspannung zu verleihen.

2. Radlageranordnung nach Anspruch 1, wobei die Aussparung (2e), die sich in Form der Nut in Umfangsrichtung erstreckt, eine bogenförmige Querschnittsform aufweist.

3. Radlageranordnung nach Anspruch 1, wobei die gehärtete Schicht durch Induktionshärtung als Wärmebehandlung ausgebildet ist.

4. Radlageranordnung nach Anspruch 1, wobei die gehärtete Schicht in einem Abschnitt der Nabenachse (2) ausgebildet ist, der von der inneren Lagerring-Montagefläche (2a), durch die Laufbahn (2b), bis zum Fußabschnitt des Nabenflansches (22) reicht.

## Revendications

1. Ensemble de roulement de support de roue comprenant :
un élément de roulement interne (3) formé avec un chemin de roulement d'un ensemble de roulement à rouleaux progressivement rétrécis à deux rangées ;
un axe de moyeu (2) ayant une surface de montage (2a) d'élément de roulement interne, formé sur une périphérie externe au niveau d'une extrémité de l'axe de moyeu (2) et adapté pour être monté avec l'élément de roulement interne (3), l'autre chemin de roulement (2b) du roulement à rouleaux progressivement rétrécis à deux rangées étant formé à un emplacement adjacent à la surface de montage (2a) d'élément de roulement interne, et une bride de moyeu (22) prévue au niveau de l'autre extrémité de l'axe de moyeu (2) ;
un élément de roulement externe (4) ; et
une double rangée de rouleaux progressivement rétrécis (5) intercalés entre le chemin de roulement de l'axe de moyeu (2) et un chemin de roulement (4b) de l'élément de roulement externe (4), et entre le chemin de roulement (2b, 3b) du roulement interne et l'autre chemin de roulement (2b) de l'élément de roulement externe (4), respectivement ;
l'un parmi ledit axe d'essieu (2) ou ledit élément de roulement externe (4) étant prévu avec un grand collier (2d, 3d) au niveau d'une extrémité du côté de la bride de moyeu de son chemin de roulement en contact avec une grande face d'extrémité du rouleau progressivement rétréci (5), et ayant en outre un évidement (2e) se présentant sous la forme d'une rainure, formé au moyen de tournage, s'étendant de manière circonférentielle le long d'une partie de coin définie de manière coopérative par le grand collier (2d) et le chemin de roulement entre eux,
ledit un parmi l'axe de moyeu (2) et l'élément de roulement externe (4), dont les deux sont réalisés à partir d'acier au carbone, ayant une surface qui est formée suite au tournage avec une couche durcie (20) au moyen d'un traitement thermique, allant au moins du chemin de roulement (2b) jusqu'à une partie à proximité d'une partie d'emplanture de la bride de moyeu (22), comprenant l'évidement (2e),
dans lequel une surface à l'intérieur de l'évidement (2e) dans la couche durcie est usinée ou meulée au point que la couche durcie n'est pas interrompue pour appliquer ainsi une contrainte résiduelle de compression sur la couche durcie.

2. Ensemble de roulement de support de roue selon la revendication 1, dans lequel l'évidement (2e) se présentant sous la forme d'une rainure s'étendant de manière circonférentielle, a une force transversale arquée.

3. Ensemble de roulement de support de roue selon la revendication 1, dans lequel la couche durcie est formée au moyen d'un durcissement par induction en tant que traitement thermique.

4. Ensemble de roulement de support de roue selon la revendication 1, dans lequel la couche durcie est formée dans une partie d'un axe de moyeu (2), s'étendant à partir de la surface de montage (2a) d'élément de roulement interne, en passant par le chemin de roulement (2b), jusqu'à la partie d'emplanture de la bride de moyeu (22).
